# EUROPEAN PATENT APPLICATION

(11) **EP 1 349 090 A2**
(43) Date of publication of application: **01.10.2003**
(21) Application number: 03394030.5
(22) Date of filing: 19.03.2003
(51) Int. Cl.: G06F 17/30

(54) **System and method for requesting product information via SMS messages**

(30) Priority: 19.03.2002 IE 20020196
(71) Applicant: Vista Communications Limited, Dundalk, Co. Louth (IE)
(72) Inventor: Gormley, David, Dundalk, Co. Louth (IE)
(74) Representative: Moore, Barry

(57) **Abstract**

A communication system is described which is adapted to enable a remote user to obtain information relating to one or more services or products. The system maintains a datastore of registered users and available products. A user supplies an identifier relating to a relevant product via a communication channel to the system. Based on the identifier and an identification of the user, the system determines an appropriate return communication channel to send information back to the user. The information selected for forwarding onto the user is selected based on a comparison of the supplied identifier with products associated with identifiers.

## Description

### Field of the Invention

The invention relates to a communication system and particularly to a system adapted to provide a remote user with requested information over one or more communication channels. The invention also relates to a method adapted to provide one or more remote users with requested information. The information provided to the user typically relates to information relating to one or more product. Within the present specification the term "product" is intended to encompass and define any product, service or informational item.

### Background to the Invention

With the advent of mobile communication and remote networking more and more people are using mobile devices such as mobile phones, PDA's and laptop to send and receive information. The type of information that may be sent or received from any specific device is limited to the technology associated with that device; for example a user having a mobile phone and using SMS type messages is limited to the number of characters that he can send or receive, a network user connecting over a remote network is limited in the speed that the information can be sent or retrieved from his laptop by the bandwidth of the connection. Despite these limitations, the convenience of the mobile device has been such that the user has come to expect information on demand.

In a traditional advertising or commercial environment a vendor may advertise the goods or services associated with their products using media such as television, radio, newspapers, bill-boards or the like. These advertisements are based on a stimulation of the viewer in the anticipation that the viewer interest will be such that he will contact the vendor so as to effect a purchase. Once interested, it is hoped that the viewer will either contact the vendor or an agent thereof so as to investigate the product more or to make a purchase. This typically requires a personal contact between the vendor and the would be purchaser either in the form of a telesales person where the contact is made over a telecommunications network or a sales person where the contact is a one-to-one personal meeting. The need to maintain such a work-force so as to facilitate this follow up contact increases the labour force required to support a specific product and also suffers in that the follow up contact is made on a personal level which sometimes dissuades persons from making contact where their interest is only marginal. Also, as the time required by the would be purchaser to effect such contact is significant there is hesitancy in the would be purchaser to make this initial contact. These and other problems serve to lessen the numbers of persons that make follow up requests for information.

### Object of the Invention

It is an object of the present invention to overcome these and other problems by providing a communication system and method that is adapted to improve communication between vendors and would-be purchasers.

### Summary of the Invention

The present invention provides a method and system adapted to enable to a user to access information relating to one or more products by providing an indicia or identifier relating to the desired information to a remote server, the server adapted to associate the identifier with the desired information and to provide that information to the user using a communication channel more appropriate to the transfer of information of that type. Typically the request for information is provided in a SMS or similar type data message over a mobile telecommunication network which has limited character functionality or capability, the incoming message is associated with an alternative communication channel such as an email address associated with the user and more appropriate for packaging larger volume data transfers, and the information corresponding to the request is forwarded to the user using that data transfer method or technique

Accordingly, the present invention provides a communication system adapted to provide a remote user with information relating to one or more products, the system comprising:
a first datastore adapted to store information relating to contact details for a specific user,
a second datastore adapted to store information relating to specific products,
means for receiving a request for information from a remote user over a first communication channel,
means for interrogating the request so as to determine the specific user and the requested information,
means for forwarding the requested information to the remote user using a second communication channel, and
wherein the means for interrogating the request retrieves a first identifier from the request, and determines based on that identifier a correct second identifier for that user so as to determine the correct contact details for forwarding the requested information to that user using the second communication channel, and a second identifier embedded within the request, the second identifier being previously associated with specific information within the second datastore.

The determinination of the correct second identifier typically requires an interrogation of the first datastore to establish whether a second identifier has already been established for that user, and if one has been established using that identifier, or alternatively if no identifier has been associated with the user creating an identifier for the user and associating that with the first identifier in the first datstore.

The information relating to the specific user stored on the first datastore desirably includes contact details for enabling communication with the user using the first and second communication channels.

The contact details pertaining to the second communication channel desirably includes contact information from at least one of:
contact information defined by the system and uniquely associatable with the specific user, and/or
contact information provided by the user.

The contact information relating to the first communication channel is desirably information adapted to enable communication with the user using data telecommunication means.

The contact information relating to the second communication channel is desirably information adapted to enable communication with the user using electronic mail type communication.

The information stored on the second datastore relating to specific products is desirably information provided by one or more third party product providers.

The system is desirably adapted to provide confidentiality whereby the contact information relating to remote users is not accesible to third party product providers.

The information relating to the specific product may be stored on a third datastore, the third datastore being remotely located from the first or second datastores such that the information stored on the second datastore relating to the specific product is information relating to enable a retrieval of the information relating to the specific product from the third datastore. Desirably the information relating to the specific product stored on the second datastore is routing information adapted to enable the system to effect a communication link with the third datastore so as to effect a retrieval from the third datastore of the desired information.

The information stored in the second datastore relating to the specific product may comprise routing information, the routing information providing communication information relating to a remote server, the communication information providing details as to where information relating to the specific product is stored.

The invention additionally provides a method of providing a user with information relating to one or more specified products, the method comprising the steps of:
receiving a request for information from a user over a first communication channel,
associating the request with a pre-defined user profile stored on a first datastore so as to ascertain a second communication channel to return the requested information,
retrieving a product identifier from the request for information,
associating the product identifier with one or more records stored in a second datastore, and
returning information relating to the one or more products stored in the second datastore to the user, the returned information being sent using the second communication channel.

The second datastore may be provided remotely from the first datastore such that the method comprises the additional steps of retrieving the information from the second datastore upon associating the product identifier with one or more records stored in the second datastore, the information retrieved relating to the requested product and forwarding that information to the user using the second communication channel.

The invention additionally provides a method of registering a user with a communication system, the method comprising the steps of:
receiving a registration request from a remote user over a first communication channel,
associating a unique identifier from the registration request with a data record for that user so as to establish a record in a first datastore for that user, the unique identifier providing information as to how to forward information to the user using the first communication channel,
defining a second identifier for the user, the second identifier providing a communication routing over a second communication channel,
associating the first and second identifiers,
confirming receipt of the registration request by forwarding a message to the remote user using the first communication channel, the forwarded message including information relating a second communication channel.

The method of registering may include the additional step of:
receiving a supplementary registration request from the user over the second communication channel, and using the associating an address identifier from the supplementary request with the second identifer, the address identifier defining the preferred communication address for that user.

On receipt of the supplementary request the record in the first datastore is updated so as to associate the address identifier with the second identifier with the first identifier such that information received over a first communication channel can be responded to using alternative secondary communication channels to that initially defined for the user.

These and other features of the present invention will be better understood with reference to the following drawings.

### Brief Description of the Drawings

Figure 1 shows a communication system according to the present invention,
Figure 2 shows a first and second datstore according to an embodiment of the present invention,
Figure 3 shows a process flow outlining a user interaction with the system of the present invention, and
Figure 4 shows a processs flow associated with a registration process of the present invention.

### Detailed Description of the Drawings

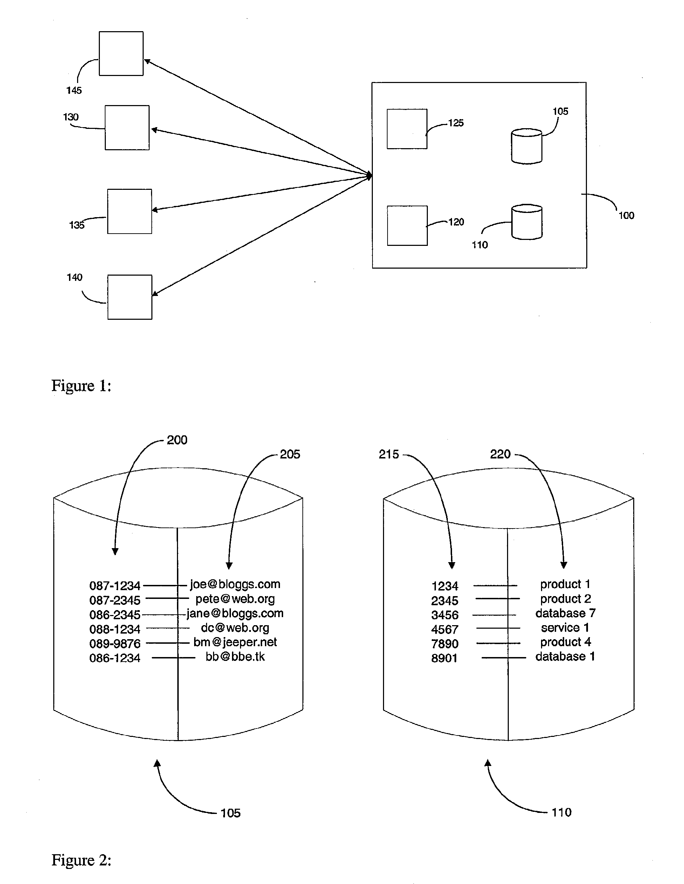

Figure 1 shows a communication system 100 according to the present invention. It includes a first datastore 105 adapted to store information relating to one or more users of the system. It also includes a second datastore 110 adapted to store information relating to products, services or informational items which the user may wish to obtain. A plurality of users 130, 135, 140, 145 may interface or communicate with the system 100 using one of one or more communication channels, the interface between the users and the system being provided by a channel interface 120, 125 appropriate to that channel.

Figure 2 shows an example of structure of the first and second datastores. The first datastore is desirably adapted to store information relating to one or more registered users. The first datastore 105 typically includes a set of first identifiers 200 associated with a first channel communication type and a set of second identifiers 205 associated with a second channel communication type. Each of the sets are cross referenced such that knowledge of an identifier from the first set 200 can be used to obtain an equivalent identifier from the second set. The records stored in the first set within the first datastore typically equate to the mobile telephone number of a remote user who has registered with the system whereas the records in the second set are email contact addresses for that user. Desirably the mobile telephone number is provided by the user and use of this number provides for data communication between the user and the system of the present invention. The email address is desirably one that is defined by the system of the invention for the user upon registration of the user with the system of the invention. In modifications to the system of the invention two or more email addresses may be associated with the user, the email addresses being associatable with one another such that email addressed to the first address is routed to the second address in a manner that will be apparant to those skilled in the art.

If the user is satisfied with using the email address that is defined by the system then in order to access the emails that are associated with that address it will be necessary for the user to log into the system 100 using technology such as POP or SMTP accounts, as will be apparant to those skilled in the art. Alternatively if the email address defined by the system is set up to route emails to another external email address, such as one previously used by the user but now associated with the first email address, then the user will not access the system of the present invention but rather a log into to their normal email server will suffice to effect a retrieval of emails.

It will be appreciated that the implementation of a dual communication channel system such as that provided by the data-structure it is possible on receipt of a communication from a user via a first communication channel such as a mobile telecommunication network to establish what the email address is for that user and to reply to that user via email. In the example illustrated in Figure 2, the receipt of a mobile communication from a remote user having a mobile contact number "087-1234" is sufficient to advise the system that that user may be contacted at the email address "joe@bloggs.com". Similarly, the receipt of an email from "bb@bbe.tk" will inform the system that that user may be contacted at the mobile device associated with the number "086-1234".

Within the second datastore 110, two sets of identifiers are also provided. In a first set 215, a series of identifiers are stored and linkable to specific products, services or informational items in a second set 220. For example the identifiers "1234" is associated with "product 1", whereas "7890" is associated with "product 4". Identifier "3456" references an External Client datastore "database 7". Similarly to that provided by the routing functionality of the first datastore this reference within the second set of records of the second datastore enables the system to pass off or direct the request for information to the identified External Client datastore for processing. The External Client datastore and associated systems will handle the request and will return the result and data if applicable to the system of the present invention. This result and returned data if any, will be processed as if the information had been located in the internal datastore 110, and will be returned to the user that requested the information using the appropriate communication channels Although illustrated here, for convenience of explanation, as comprising a single parameter, it will be appreciated by those skilled in the art that the data records in the second set 220 of the second datastore 110, are typically comprehensive records, external datastore references or informational material associated with the product, service or informational items in question. As such, it will be appreciated that the record relating to "Product 1" could be a comprehensive products description or price structure which can then be packaged in a suitable format for returning to the user that requested the information.

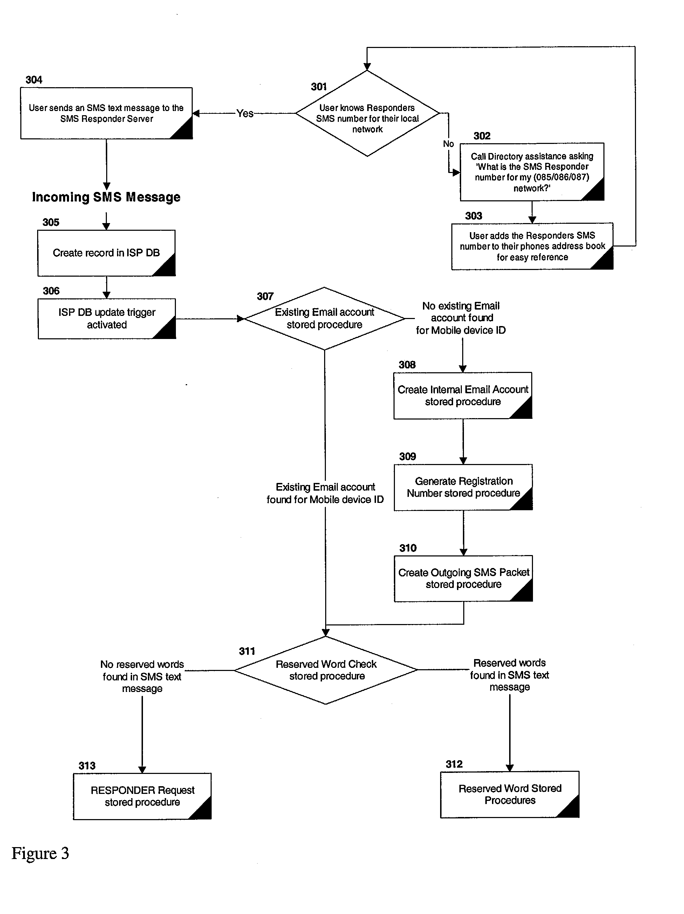

Figure 3 shows a typical data flow route that it utilized in communication by a user and the system of the present invention.

Processes 301 to 304 inclusive describe user actions that are typically seen when interacting with the Responders SMS system. The remaining 305 to 313 inclusive go into detail on how the system is implemented. Each of these processes is expanded in their own process diagram with accompanying descriptions.

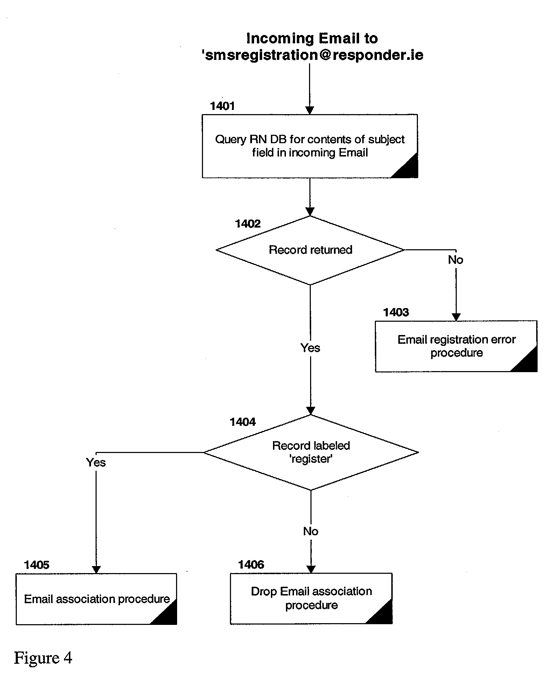

Figure 4 shows a typical data flow route that it utilized in communication by a user
and the system of the present invention so as to enable the user of a Mobile
Device registers/associates and disassociates an Email address with their Mobile
Device(s).

### Step 301. User knows Responders SMS number for their local network

The system is desirably accessible over one or more different mobile telecommunication networks with a different SMS access number for each of the mobile phone networks. It is advantageous in that it enables a prevention of degradation in service to the mobile user if routing between the different networks fail.

### Step 302. Call Directory assistance asking 'What is the SMS Responder number for my (085/086/087) network?'

As there is no voice equivalent to the connectivity and billing functions found in the SMS network, only a country and network wide number would be needed to serve each mobile network and connected subscribers. These numbers will be listed with each Directory service provider, in both voice and print. The quote above would be a common request to the Directory operator. Through caller id the operator could see what network they are calling in on. Such a system is presently been used by the '11850' Directory service provider in the Republic of Ireland to return to the caller an SMS text message giving their requested phone number listing.

### Step 303. User adds the Responders SMS number to their phones address book for easy reference

To prevent further calls to the Directory assistance operator the caller would save their local network SMS Responder access number to the phones memory. For each phone this process is different and will be well understood by those skilled in the art.

### Step 304. User sends an SMS text message to the SMS Responder Server

The mobile SMS user can send any form of text to the Responders SMS service, both numeric, alphabetic and a mixture of both. This extends the possible range of responder numbers and their use greatly but only to our SMS, E-mail and Web clients. Non-SMS capable landline phones do not have access to this information. The service is primarily aimed at the mobile user. A landline (office/home phone) access method is also defined. There will two sets of access numbers listed, one for an SMS Mobile phone user and second comprising just numerics for the landline (ordinary tone based telephone) user. For example... RS (Responder SMS) [SMS 'phrase']
RL (Responder Land Line) ['Numeric']

RS and RL will be utilised wherever appropriate to the medium. RS would be used for example on outside signage where landline phones would not be available. RL and RS could be used on the print and broadcast media as both mediums of communication could be utilised.

Through the ability of the Responder Network to locate a Mobile phone user geographically text requests do not have to be unique. Commonly the mobile user enters the Responder number(s) or query onto their phone, selects send and from their phones address book selects the name under which their local network SMS Responder access number is stored and hits send. The request is then passed to our SMS service for processing. It will be appreciated that Multiple Responder Numbers can be requested in the one SMS request. Each Responder Number or text query typically requires the specific query to be followed by a hash (#) symbol or some other suitable delimiter or differentiator so as to delineate each separate query. If a single Responder Number or text query is being made then the hash (#) symbol does not need to be used. Sub-Responder Numbers are separated with the bang (*) symbol or other alternative delimiter.

### Step 305. Create record in ISP DB

The system picks up the SMS message sent by the mobile device and writes a record into the Incoming SMS Packet Database [ISP DB] containing all the relevant fields from the SMS message. All incoming SMS requests are queued in this database for processing.

### Step 306. ISP DB update trigger activated

When the system creates a record of the incoming SMS packet in the Incoming SMS Packet Database [ISP DB], the Incoming SMS Packet Database Update Trigger [ISP DB UT] is activated. This trigger starts the processing of each SMS packet record in the [ISP DB].

### Step 307. Existing Email account stored procedure

This procedure checks to see if the Mobile Device ID/Phone number has an entry in the [Email Database]. If a record is not returned from this query it is assumed that this is the first time the Mobile Device has connected into the Responder System. Every Mobile Device that communicates with the Responder Services is given an internal Email account. To this end the stored procedure [Create Internal Email Account] is called. If a record is returned from this query, it is assumed that the Mobile Device has connected into the Responders Servers at least once previously. The stored procedure [Reserved Word Check] is then called.

### Step 308. Create Internal Email Account stored procedure

This procedure [Create Internal Email Account] was called as a result of step 407 above. An internal Email address is created for the Mobile device based on the Mobile devices unique ID (phone number for a Mobile Phone) e.g. +353875551888. This phone number is unique in the worlds Mobile phone network. This Email address is used for internal routing and storage purposes initially. The owner of the Email address can later configure their Email account to accept email from external sources.

### Step 309. Generate Registration Number stored procedure

This procedure [Generate Registration Number] was called to generate a unique registration number by passing the Mobile Devices ID through an algorithm. This number will then, together with the instructions on how to associate an external Email account with the Mobile Device, will be passed back to the originating device in the form of a single SMS message.

### Step 310. Create Outgoing SMS Packet stored procedure

This procedure [Create Outgoing SMS Packet] is then called and passed the results of step 309. The procedure then writes the unique Registration Number passed to it by the stored procedure in step 309 along with instructions on how to complete the association of an external Email account with the target/originating Mobile Device to an Outgoing SMS Packet Database [OSP DB]. The system will then take this record from the Outgoing SMS Packet Database [OSP DB], format and send it out onto the SMS network.

### Step 311. Reserved Word Check stored procedure

With the successful completion of the above procedures the stored procedure [Reserved Word Check] is called.

### Step 312. Reserved Word Stored Procedures

Stored procedure [Reserved Word Check] parses the body of the SMS text message looking for any reserved words on which the system will need to act. If the system finds any reserved word(s) in the body of the SMS text message it disregards all other text in the body of the SMS text message. There is a stored procedure designed to handle each reserved word or phrase. The system can be extended in functionality by the addition of reserved words with associated reserved word stored procedures. Reserved word stored procedures that are typically implemented are:
[Blank Message]. This is a special case. The user of the Mobile Device has sent a blank/empty SMS text message into the Responders SMS Service. It is assumed that the user wants general information on the services available to them through the Responder network. An SMS text message is formatted and passed to the Create Outgoing SMS Packet Stored Procedure [COSP SP], for processing.
[SMS Registration]. This stored procedure is called if the reserved word 'register' has been received in an SMS text message. Before a new registration number is generated the procedure checks with the Registration Number Database [RN DB] to see if one already exists for the Mobile device and if so, then if it has just been generated. If it has just been generated then the procedure disregards the query as the Mobile device has just accessed the Responder system for the first time with the reserved word 'register'. Because of the logic and rules setout previously in this document, steps 308 to 310 inclusive have already handled the generation and transmission of a unique registration number. If this has not been the first time that the Mobile device has accessed the Responders Services and a unique number already exists for its Mobile device ID in the Registration Number Database [RN DB] that number is returned to the requesting Mobile device by passing these details to the Create Outgoing SMS Packet Stored Procedure [COSP SP] for processing. If a record does not exist in the Registration Number Database [RN DB] for that Mobile device the Generate Registration Number Stored Procedure [GRN SP] is called to do so and the results of this are then passed to the Create Outgoing SMS Packet Stored Procedure [COSP SP] for processing.
[SMS Drop]. This stored procedure carries out the exact same functionality as the [SMS Registration] stored procedure above. The only exception is that the 'action' field in the Registration Number Database [RN DB] is labeled 'drop' and not 'register' as above. The only difference between a 'drop' and a 'register' request is in the way the [Email registration/drop Stored Procedure] handles an incoming Email. This will be explained further in this document when the registration/association procedure of an external Email address is explained in Figure 4.
[SMS Info]. This stored procedure is used when the user of the Mobile device sends an SMS text message with the word 'info' to the Responders SMS service. The procedure assumes the user is requesting information specific to their accounts. This information detailing their registered/associated external Email addresses, access logs and queries submitted, are packaged and dispatched to the Responders core Email server for delivery to the users Email Account(s). A short format of this information is passed to the Create Outgoing SMS Packet Stored Procedure [COSP SP] for processing.
[Email On]. This stored procedure is used when the user of the Mobile device sends an SMS text message with the phrase 'email on' to the Responders SMS service. This activates the internal Email account as the Mobile devices primary Email account. If the [Reserved Word Check] procedure does not find any word(s) or phrases that match the criteria needed to call the reserved word procedures listed above the [Responder Request] stored procedure is called.

The stored procedure [Responder Request] handles all queries requesting information from the Responder Systems main Databases. These Databases and Database links contain all the information that can be made available to the Responders user base.

### Step 313. Responder Request Stored Procedure

This stored procedure takes the incoming SMS request from the Mobile user and queries both Responders internal Databases and external client Databases for records matching the SMS request. If this information is retrieved it is packaged, placed in and Email, addressed to the Mobile Devices associated Email address and delivered to Responders Email server for routing to the addressed recipient or recipients.

An SMS message detailing the positive outcome of the Mobile Devices SMS request is formatted and delivered to the Create Outgoing SMS Packet Stored Procedure [COSP SP] for processing and delivery to the associated Mobile Device ID(s).

If information is not retrieved by the query an SMS message detailing the negative outcome of the Mobile Devices SMS request is formatted and delivered to the Create Outgoing SMS Packet Stored Procedure [COSP SP] for processing and delivery to the associated Mobile Device ID(s).

Figure 4 outlines a process flow associated with the registration of a user with the system of the present invention. The user having previously identified the correct email address with which to contact the system 100 sends an email to this registration address.

### Step 1401. Query RN DB for contents of subject field in incoming Email

A user wishing to associate an external Email address with a Mobile Device ID sends an Email from that account with the unique registration number (returned previously to the Mobile device in an SMS text message) in the subject field to the Responders Email Server.

The system picks up the Email and writes a record into the Incoming Email Association Database [IEA DB] containing all the relevant fields from the Email.

A Stored procedure [Query Registration Number] is called. This procedure checks to see if the unique registration number contained in the incoming Emails subject field has an associated Mobile Device ID/Phone number record in the [Registration Number Database].

### Step 1402. Record returned

If a record is not returned from this query it is assumed that there has been a typographic error in the subject field or the incoming Email has been delivered to the Responder Email server in error. If so, a stored procedure [Email Registration Error (step 1403)] will be called. If a record is returned from this query, Step 1401, the record is checked to see if it has been labeled 'register' or 'drop'.

If the record has been labeled 'register' a stored procedure [Email Association] is called. If the record has been labeled 'drop' a stored procedure [Drop Email Association] is called.

### Step 1403. Email registration error procedure

The stored procedure [Email Registration Error] was called as Step 1401 did not return a record from the Registration Number Database [RN DB]. An Email is generated describing the failed Email to Mobile Device association along with steps that can be taken by the user to correct the problem. The Email is formatted and returned to the originating Email address of the incoming Email.

### Step 1404. Record labeled 'register'

If the record returned from Step 1401 was labeled 'register' a stored procedure [Email Association (Step 1405)] is called. If the record returned from Step 1401 was labeled 'drop' the stored procedure [Drop Email Association (Step 1406)] is called.

### Step 1405. Email association procedure

If the stored procedure [Email Association] was called from the result of Step 1404 above then the following procedures are followed to complete the Email to Mobile Device association., the procedures have been previously described with reference to Figure 3. The Email Database [E DB] record for the associated Mobile Device is updated to reflect the new/additional forwarding Email address to be used when routing information returned from a datastore in response to an SMS text message being received from that Mobile Devices ID requesting that information from the Responders datastores.
A script is called which adds the originating incoming Email address to the forwarding list of the internal Email account associated to that Mobile Device ID in the Responders Core Email Server. An Email is generated detailing the successful association of the incoming Emails originating address with the Mobile Device ID. This Email is sent to the internal Email address associated with that Mobile Devices ID. This ensures that all Email addresses that have been associated with that Mobile Device are notified of the addition/change to the Mobile Devices Email settings. To notify the Mobile Devices that are associated with that internal Email account a record is written to the Outgoing Staging SMS Packet Database [OSSP DB]. The stored procedure Create Outgoing SMS Packet Stored procedure [COSP SP] ( Step 310) is called to complete the SMS message processing. The procedure writes the record from the Outgoing Staging SMS Packet Database [OSSP DB] into the Outgoing SMS Packet Database [OSP DB]. The system then takes this information, formats it and transfers it onto the SMS Network for routing to the targeted Mobile Device ID.

### Step 1406. Drop Email association procedure

If the stored procedure [Drop Email Association] was called from the result of Step 1404 above then the following procedures are followed to complete the Email to Mobile Device disassociation. The Email Database [E DB] record for the associated Mobile Device is updated to reflect the removal of the forwarding Email address for that Mobile Devices ID. A script is called which removes the originating incoming Email address to the forwarding list of the internal Email account associated to that Mobile Device ID in the Responders Core Email Server. An Email is generated detailing the successful disassociation of the incoming Emails originating address with the Mobile Device ID. This Email is sent to the internal Email address associated with that Mobile Devices ID. This ensures that all Email addresses that have been associated with that Mobile Device are notified of the addition/change to the Mobile Devices Email settings. An Email is also sent to the originating Email address on the successful disassociation process.

To notify the Mobile Devices that are associated with that internal Email account a record is written to the Outgoing Staging SMS Packet Database [OSSP DB]. The stored procedure Create Outgoing SMS Packet Stored procedure [COSP SP] is called to complete the SMS message processing. The procedure writes the record from the Outgoing Staging SMS Packet Database [OSSP DB] into the Outgoing SMS Packet Database [OSP DB]. The system then takes this information, formats it and transfers it onto the SMS Network for routing to the targeted Mobile Device ID.

## Claims

1. A communication system adapted to provide a remote user with information relating to one or more products, the system comprising:
a) a first datastore adapted to store information relating to contact details for a specific user,
b) a second datastore adapted to store information relating to specific products,
c) means for receiving a request for information from a remote user over a first communication channel,
d) means for interrogating the request so as to determine the specific user and the requested information,
e) means for forwarding the requested information to the remote user using a second communication channel, and
wherein the means for interrogating the request retrieves a first identifier from the request, and determines based on that identifier a correct second identifier for that user so as to determine the correct contact details for forwarding the requested information to that user using the second communication channel, and a second identifier embedded within the request, the second identifier being previously associated with specific information within the second datastore.

2. The system as claimed in claim 1 wherein the determinination of the correct second identifier typically requires an interrogation of the first datastore to establish whether a second identifier has already been established for that user, and if one has been established using that identifier, or alternatively if no identifier has been associated with the user creating an identifier for the user and associating that with the first identifier in the first datstore.

3. The system as claimedin claim 1 or 2 wherein the information relating to the specific user stored on the first datastore desirably includes contact details for enabling communication with the user using the first and second communication channels.

4. The system as claimed in claim 3 wherein the contact details pertaining to the second communication channel desirably includes contact information from at least one of:
a) contact information defined by the system and uniquely associatable with the specific user, and/or
b) contact information provided by the user.

5. The system as claimed in any preceding claim wherein the first identifier includes information relating to the first communication channel so as to enable communication with the user using data telecommunication means.

6. The system as claimed in claim 4 wherein the contact information relating to the second communication channel is information adapted to enable communication with the user using electronic mail type communication.

7. The system as claimed in any preceding claim wherein the information stored on the second datastore relating to specific products is information provided by one or more third party product providers.

8. The system as claimed in any preceding claim wherein the records in the first datastore is not accesible to third party product providers.

9. The system as claimed in any preceding claim wherein the information relating to the specific product may be stored on a third datastore, the third datastore being remotely located from the first or second datastores such that the information stored on the second datastore relating to the specific product is information relating to enable a retrieval of the information relating to the specific product from the third datastore.

10. The system as claimed in claim 9 wherein the information relating to the specific product stored on the second datastore is routing information adapted to enable the system to effect a communication link with the third datastore so as to effect a retrieval from the third datastore of the desired information.

11. A method of providing a user with information relating to one or more specified products, the method comprising the steps of:
a) receiving a request for information from a user over a first communication channel,
b) associating the request with a pre-defined user profile stored on a first datastore so as to ascertain a second communication channel to return the requested information,
c) retrieving a product identifier from the request for information,
d) associating the product identifier with one or more records stored in a second datastore, and
e) returning information relating to the one or more products stored in the second datastore to the user, the returned information being sent using the second communication channel.

12. The method as claimed in claim 11 wherein the second datastore is provided remotely from the first datastore such that the method comprises the additional steps of:
a) retrieving the information from the second datastore upon associating the product identifier with one or more records stored in the second datastore, the information retrieved relating to the requested product and
b) forwarding that information to the user using the second communication channel.

13. The method as claimed in claim 11 or 12 including the addtional steps of registering a user, the method comprising the steps of:
a) receiving a registration request from a remote user over a first communication channel,
b) associating a unique identifier from the registration request with a data record for that user so as to establish a record in a first datastore for that user, the unique identifier providing information as to how to forward information to the user using the first communication channel,
c) defining a second identifier for the user, the second identifier providing a communication routing over a second communication channel,
d) associating the first and second identifiers,
e) confirming receipt of the registration request by forwarding a message to the remote user using the first communication channel, the forwarded message including information relating a second communication channel.

14. The method as claimed in claim 13 including the additional step of:
a) receiving a supplementary registration request from the user over the second communication channel, and using the associating an address identifier from the supplementary request with the second identifer, the address identifier defining the preferred communication address for that user.

15. The method as claimed in claim 14 wherein on receipt of the supplementary request the record in the first datastore is updated so as to associate the address identifier with the second identifier with the first identifier such that information received over a first communication channel can be responded to using alternative secondary communication channels to that initially defined for the user.

16. A system substantially as hereinbefore described with reference to and/or as illustrated in Figure 1 to 4 of the accompanying drawings.

17. A method substantially as hereinbefore described with reference to and/or as illustrated in Figure 1 to 4 of the accompanying drawings.
